# EUROPÄISCHE PATENTSCHRIFT

(11) **EP 1 716 820 B1**
(45) Veröffentlichungstag und Bekanntmachung des Hinweises auf die Patenterteilung: **04.07.2012**
(21) Anmeldenummer: 06005546.4
(22) Anmeldetag: 17.03.2006
(51) Int. Cl.: A61C 19/00

(54) **Gerät zum Polymerisieren von polymerisierbarem Dentalmaterial sowie Verfahren zur Bestimmung des Polymerisationsgrades**
Apparatus for curing a polymerisable dental material and method for determining the degree of polymerisation
Appareil pour polymériser une masse dentaire, ainsi que procédé pour déterminer le degré de polymérisation

(30) Priorität: 26.04.2005 DE 102005019386
(43) Veröffentlichungstag der Anmeldung: 02.11.2006
(73) Patentinhaber: Ivoclar Vivadent AG, 9494 Schaan (LI)
(72) Erfinder: Plank, Wolfgang, 6830 Rankweil (AT); Goerge, Reinhard, 88131 Lindau (DE)
(74) Vertreter: Baronetzky, Klaus

(56) Entgegenhaltungen:
- EP-A- 1 236 444
- EP-A2- 0 993 810
- EP-A2- 1 281 370
- WO-A-2006/014402
- WO-A1-02/062420
- WO-A2-2005/057670
- DE-A1- 3 829 817
- US-A- 4 538 070
- US-A- 5 007 837
- US-A- 5 503 559
- US-A- 5 738 678
- US-A- 5 922 605
- US-A1- 2001 029 009
- US-A1- 2002 014 864
- US-B1- 6 386 865

## Beschreibung

Die Erfindung betrifft ein Gerät zum Polymerisieren von polymerisierbarem Dentalmaterial, gemäß dem Oberbegriff von Anspruch 1 sowie ein entsprechendes Verfahren gemäß dem Oberbegriff von Anspruch 8.

Es ist seit längerem bekannt, Materialien mit geeigneter Strahlung, beispielsweise Wärmestrahlung, zu beaufschlagen und über einen Sensor die von dem betreffenden Material reflektierte Lichtmenge zu erfassen. Ein Beispiel hierfür ist die aus der DE-GM 92 04 621 bekannte Lösung. Nachteilig bei dieser Lösung ist es, dass die Lichterfassung stark von der Oberflächenbeschaffenheit des Materials abhängt. Eine derartige Lösung ist für die Beaufschlagung von Dentalmaterialien nicht geeignet, denn allein schon der gerade vorliegende Feuchtigkeitsgrad des Dentalmaterials würde den Reflektionsgrad stark beeinflussen und insofern zu Meßwertverfälschungen führen.

Um bei Dentalmaterialien jedenfalls eine zuverlässige Erfassung der Energiebeaufschlagung, also der Beaufschlagung mittels Licht- und/oder Wärmequelle vorzunehmen, ist aus der DE-A1-196 18 542 die Verwendung eines Sensors als Lichtsensor bekannt. Der Sensor ist außerhalb des eigentlichen Bestrahlungsbereichs angeordnet und misst praktisch die Helligkeit und/oder Wärme im Umfeld des Dentalmaterials, so dass die Nachteile der vorstehend genannten Lösung vermeidbar sind.

Aus der Druckschrift US 5,503,559 ist darüber hinaus eine Vorrichtung und ein Verfahren zur augenblicklichen Erfassung der Restauration eines beschädigten Zahnes unter Verwendung von Fluoreszenz-Spektroskopie bekannt. Eine die Fluoreszenz anregende Lichtquelle wird zur Aktivierung und Polymerisation sowie zur Überwachung der Restauration eingesetzt, wobei in Wellenlängenbereichen zwischen 250 nm und 450 nm sowie 500 nm und 540 nm gearbeitet wird.

Darüber hinaus hängt die Polymerisation des verwendeten Dentalmaterials das beispielsweise für Dentalrestaurationen eingesetzt wird, stark von zahlreichen Faktoren ab. Beispielsweise polymerisieren typischerweise Oberflächenschichten schneller als tiefliegende Schichten des Dentalmaterials.

Für die Erfassung, welche Polymerisationszeit günstig ist, ist es bereits vorgeschlagen worden, die Masse des Polymerisationsmaterials zu erfassen und in Abhängigkeit hiervon die Polymerisationszeit einzustellen. Auch sind zahlreiche weitere Maßnahmen vorgeschlagen worden, um zu verhindern, dass es durch unvollständige Polymerisation zur Freisetzung von Monomeren mit freien Radikalen kommt, aber auch andererseits, dass durch eine allzu lange Polymerisationszeit die gefürchtete Randspaltenbildung der Dentalrestauration auftritt.

Nicht nur unterschiedliche Dentalmaterialien, sondern auch beispielsweise im Einzelfall liegende Parameter, wie beispielsweise die Lagerzeit des Dentalmaterials vor der Applikation beeinflussen offenbar den Polymerisationsvorgang. Um ein optimales Polymerisationsergebnis zu erzielen müsste man praktisch mit genau der gleichen Form aus der gleichen Charge des Polymerisationsmaterials eine Probepolymerisation realisieren, diese dann aufschneiden und versuchen festzustellen, wie die Polymerisationszeit eingestellt werden sollte. Dieses Verfahren ist natürlich nicht praxistauglich.

Daher liegt der Erfindung die Aufgabe zugrunde, ein Gerät zur Polymerisation von polymerisierbarem Dentalmaterial gemäß dem Oberbegriff von Anspruch 1 sowie ein entsprechendes Verfahren gemäß dem Oberbegriff von Anspruch 8 bereitzustellen, das ein optimiertes Polymerisationsergebnis bietet, ohne dass ein besonderer Zusatzaufwand erforderlich wäre.

Diese Aufgabe wird erfindungsgemäß durch Anspruch 1 bzw. 8 gelöst. Vorteilhafte Weiterbildungen ergeben sich aus den abhärgiger Ansprüchen.

Erfindungsgemäß ist es besonders günstig, dass die vom Dentalmaterial selbst abgegebene Strahlung erfasst wird. Damit sind Fehler durch Reflektionen und dergleichen von vorneherein ausgeschlossen, wobei es sich versteht, dass durch geeignete Wahl der optischen Achsen der Erfassungsstrahlung und der Beaufschlagungsstrahlung dafür Sorge getragen werden kann, dass nicht durch andere Strahlungseffekte, wie beispielsweise Interferenzen oder dergleichen, Verfälschungen des Messergebnisses auftreten.

Erfindungsgemäß ist es besonders günstig, dass die Wahl der Wellenlängen und Wellenlängenbereiche der Erfassungsstrahlung und der Beaufschlagungsstrahlung in weiten Bereichen an die Erfordernisse anpassbar ist . Dazu wird mit dem Sensor ein Wellenlängenbereich zwischen 800 nm und 10.000 nm erfasst. Beispielsweise kann die Beaufschlagungsstrahlung den Bereich des ultravioletten Lichts abdecken, während der Wellenlängenbereich der vom Sensor erfassten Strahlung beispielsweise über 3000 nm liegt, so dass ein deutlicher Abstand zwischen den Wellenlängen bzw. Frequenzen vorliegt.

Es ist vorgesehen, dass die Wellenlängenbereiche, der Polymerisationsstrahlung und der von dem Dentalmaterial abgegebenen Erfassungsstrahlung voneinander verschieden sind.

Erfindungsgemäß ist es besonders günstig, dass sich durch die photothermische Erfassung des Polymerisationsmaterials der Polymerisationsgrad exakt bestimmen lässt, und zwar je musterspezifisch, also in Abhängigkeit von der aktuell beaufschlagten Dentalmasse. Damit ist es trotz des Verzichts auf eine Probepolymerisation möglich, den Polymerisationsgrad festzustellen und damit den Abschaltzeitpunkt und/oder den Polymerisationszyklus, also den zeitlichen Ablauf der Energiebeaufschlagung für die Polymerisation exakt festzulegen

Die Energiebeaufschlagung mit der Polymerisationsstrahlung kann in weiten Bereichen an die Erfordernisse oder die erwünschten Polymerisationsergebnisse angepasst werden. Beispielsweise kann die Licht- oder Wärmequelle im zeitlichen Verlauf mit einem Rechteckpulssignal moduliert angesteuert werden, wie es mit LED- oder Laserdioden ohne weiteres darstellbar ist.

Erfindungsgemäß besonders günstig ist es, dass Störungseffekte, die unterschiedliche Polymerisationsergebnisse erzeugen können, erfindungsgemäß kompensiert werden können: Wenn beispielsweise in einer feuchten Oberfläche die Oberfläche des Dentalmaterials stärker für die Beaufschlagungsstrahlung reflektierend ist, so dass die im Dentalmaterial ankommende Polymerisationsstrahlung eine geringere Intensität aufweist, ist die von dem Dentalmaterial abgegebene Erfassungsstrahlung in entsprechender Weise ebenfalls geringer, so dass insofern erstmals unmittelbar der tatsächliche Polymerisationsgrad in situ bestimmbar ist.

Die Erfassungsstrahlung kann in beliebiger geeigneter Weise dem Sensor zugeleitet werden. Bei Verwendung eines Handgeräts bietet sich an, sowohl die Beaufschlagungsstrahlung als auch die Erfassungsstrahlung durch einen Lichtleitstab durchzuleiten und dann mit einer geeigneten Trennvorrichtung wie einem besonderem Spiegel, der im Winkel von etwa 45° geneigt ist und für die Beaufschlagungsstrahlung durchlässig, für die Erfassungsstrahlung hingegen reflektierend ist, eine Strahlaufspaltung vorzunehmen. Bei dem Aufbau stationärer Geräte ist es günstig, die Licht- und /oder Wärmequelle oder die -quellen an einem gegenüber dem Sensor oder den Sensoren räumlich versetzten Ort anzuordnen. Beispielsweise kann ein Sensor senkrecht zur Oberfläche ausgerichtet sein, während zwei Strahlungsquellen die Oberfläche des Dentalmaterials im Winkel von beispielsweise 30° beaufschlagen.

Es versteht sich, dass es günstig ist, wenn der Sensor von Störeinflüssen abgeschirmt ist, oder diese kompensiert sind. Bei druckempfindlichen Sensoren kann beispielsweise ein nicht von der Erfassungsstrahlung beaufschlagter Referenzsensor vorgesehen sein, der beispielsweise in einer Messbrücke zusammen mit dem aktiven Sensor angeordnet ist, um so Fehlmessungen zu verhindern. Auch versteht es sich, dass der Sensor in geeigneter Weise kalibriert werden kann, wenn exakte Ergebnisse erwünscht sind.

Erfindungsgemäß besonders günstig ist es, dass die Polymerisation als exotherme Reaktion exakt erfassbar ist und dass sich dieser Effekt in erfindungsgemäß überraschend einfacher Weise zur Bestimmung des Polymerisationsgrades ausnutzen lässt.

In einer weiteren vorteilhaften Ausgestaltung ist es vorgesehen, dass mit dem Sensor Licht in einem Wellenlängenbereich zwischen 800 nm und 6.000 nm, bevorzugt zwischen 3.000 nm und 5.000 nm, oder in einem Unterbereich dieses Wellenlängenbereichs erfassbar ist.

In einer weiteren vorteilhaften Ausgestaltung ist es vorgesehen, dass die von der Licht- und/oder Wärmequelle auf das Dentalmaterial abgegebene Polymerisationsstrahlung in einem Wellenlängenbereich zwischen 350 nm und 550 nm liegt.

In einer weiteren vorteilhaften Ausgestaltung ist es vorgesehen, dass mit dem Sensor die Temperatur der Erfassungsstrahlung erfassbar ist und von der Steuervorrichtung ihr zeitlicher Verlauf, insbesondere die Temperaturzunahme und/oder die Temperaturzunahme, auswertbar ist.

In einer weiteren vorteilhaften Ausgestaltung ist es vorgesehen, dass der Sensor ein Signal an die Steuervorrichtung abgibt, wenn der Gradient des Zustandsparameters des Dentalmaterials sich ändert, insbesondere die Erwärmung abnimmt und dass die Steuervorrichtung das Ausgangssignal des Sensors verarbeitet und zur Steuerung des Geräts, insbesondere zur Steuerung der Licht- und/oder Wärmequelle, aufbereitet.

In einer weiteren vorteilhaften Ausgestaltung ist es vorgesehen, dass ein von der Steuervorrichtung abgegebenes Steuersignal ein Abschaltsignal ist, mit welchem das Gerät ausgeschaltet und der Polymerisationsvorgang beendet wird und dass der Sensor eine vom Dentalmaterial abgegebene Strahlung mit einer Wellenlänge von 800 nm bis 10000 nm, inbesondere von 3000 nm bis 5000 nm erfasst.

In einer weiteren vorteilhaften Ausgestaltung ist es vorgesehen, dass zur Erfassung der vom Dentalmaterial abgegebenen Strahlung die Licht- und/oder Wärmequelle während eines Polymerisationszykluses von der Steuervorrichtung mindestens einmal kurzfristig abgeschaltet wird.

Weitere Vorteile, Einzelheiten und Merkmale ergeben sich aus der nachfolgenden Beschreibung mehrerer Ausführungsbeispiele anhand der Zeichnungen.

Es zeigen:
- Fig. 1: eine schematische Ansicht einer ersten Ausführungsform eines erfindungsgemäßen Geräts zum Polymerisieren von polymerisierbarem Dentalmaterial;
- Fig. 2: eine weitere Ausführungsform des Geräts gemäß Fig. 1;
- Fig. 3: eine Darstellung der Emissionsmaxima der Beaufschla gungsstrahlung und der Empfindlichkeitskurve des Sen sors;
- Fig. 4: ein Diagramm des zeitlichen Verlaufs der erfindungsgemä- β en Steuerung;
- Fig. 5: ein Diagramm zur Darstellung einer modifizierten erfin- dungsgemäßen Steuerung;
- Fig. 6: eine weitere Ausführungsform eines erfindungsgemäßen Geräts;
- Fig. 7: eine weitere Ausführungsform eines erfindungsgemäßen Geräts;
- Fig. 8: eine weitere Ausführungsform eines erfindungsgemäßen Geräts;
- Fig. 9: eine Darstellung eines Teils eines erfindungsgemäßen Lichtleitelements;
- Fig.: 10 die Anordnung der Beaufschlagungs-Lichtleitfasern in einem erfindungsgemäßen Lichtleitstab;
- Fig. 11: die Anordnung der Erfassungs-Lichtleitfasern in einem erfindungsgemäßen Lichtleitstab; und
- Fig. 12: eine schematische Darstellung eines erfindungsgemäßen Geräts als Handgerät.

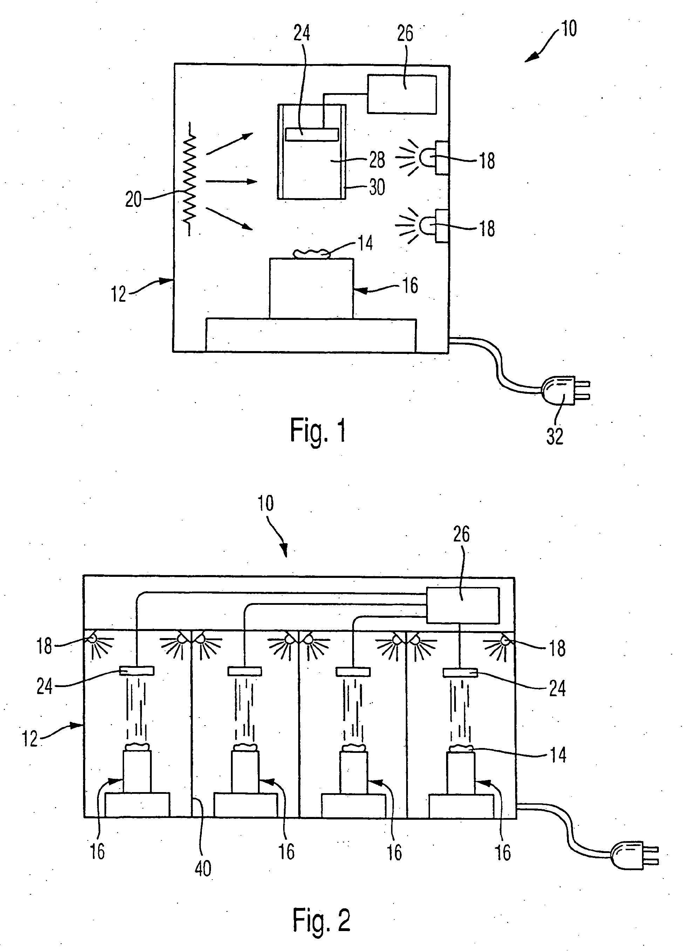

Das in Fig. 1 dargestellte Gerät 10 weist ein Gehäuse 12 auf, das für die Aufnahme von Dentalmaterial 14 bestimmt ist, die auf einem Lagersockel 16 erfolgt.

Für die Polymerisation des Dentalmaterials 14 in einem Polymerisationsbereich, der sich frei und mit Strahlung beaufschlagbar darbietet, sind eine Mehrzahl von Lichtquellen 18 und/oder Wärmequellen 20 vorgesehen, die in der dargestellten Ausführungsform den Polymerisationsbereich mit elektromagnetischen Wellen der entsprechenden Frequenzbereiche bestrahlen. Sowohl die Lichtquellen 18 als auch die Wärmequellen 20 sind bei dem dargestellten Ausführungsbeispiel an der Seitenwand des Gehäuses 12 innen angebracht. Damit trifft die von diesen Quellen emittierte Strahlung nicht senkrecht auf die Oberfläche des Dentalmaterials 14 auf, sondern schräg seitlich von oben. Durch die schräge Beaufschlagung wird zugleich vermieden, dass der Polymerisationswirkungsgrad der abgegebenen Strahlung durch Reflektionen stark reduziert wird.

In vielen Fällen ist die Oberfläche des Polymerisationsbereichs des Dentalmaterials nicht eben, also horizontal, sondern beispielsweise gewölbt oder hat eine beliebige andere Form. Durch die Anordnung mehrerer Quellen kann verhindert werden, dass durch Reflektionen das Polymerisationsergebnis stark negativ beeinflusst wird.

Auch wenn in Fig. 1 im dargestellten Prinzipschnitt lediglich an zwei Seiten des Gehäuses, nämlich recht und links, Wärmequellen 20 und Lichtquellen 18 dargestellt sind, versteht es sich, dass tatsächlich eine Mehrzahl von Quellen ringsum verteilt vorgesehen sein kann, und zwar in beliebiger geeigneter Verteilung. Eine Darstellung einer derartigen Verteilung ist aus der DE-A1-196 18 542, ersichtlich.

In dem dargestellten Ausführungsbeispiel ist ein Sensor 24 oberhalb des Dentalmaterials 14 aufgehängt. Der Sensor 24 ist mit einer Steuervorrichtung 26 verbunden, die dazu bestimmt ist, das Gerät 10 zu steuern und insbesondere festzulegen, wann die Quellen 18 und 20 abgeschaltet werden bzw. wann ihre Leistung reduziert werden soll.

Hierzu erfasst der Sensor 24 die von dem Dentalmaterial 14 abgegebene Erfassungsstrahlung 28. Um eine Beeinflussung durch die Quellen 18 und 20 zu verhindern, ist den Sensor umgebend eine Abschirmung 30 nach der Art einer Schürze vorgesehen, wobei es sich versteht, dass die Abschirmung 30 den Zutritt der Beaufschlagungsstrahlung zu dem Polymerisationsbereich nicht behindern sollte.

Das Gerät 10 ist über einen an sich bekannten Stromversorgungsanschluß 32 angeschlossen, und die dargestellte Ausführungsform bildet ein stationäres Gerät 12. Alternativ ist es auch möglich, einen Energiespeicher in dem Gerät 12, beispielsweise einen Akkumulator, vorzusehen, der dann über den Stromversorgungsanschluß 32 wiederaufladbar ist.

Fig. 2 zeigt eine modifizierte Ausgestaltung eines erfindungsgemäßen Geräts 10. Hier wie auch in den weiteren Figuren bezeichnen die gleichen Bezugszeichen gleiche oder entsprechende Teile und bedürfen keiner weiteren Erläuterung. Bei der Lösung gemäß Fig. 2 sind eine Vielzahl von Lagersockeln 16 mit entsprechenden Dentalmaterialien und Polymerisationsbereichen 14 nebeneinander vorgesehen, oberhalb derer je wenigstens ein Sensor 24 angeordnet ist.

Je seitlich oberhalb jedes Sensors 24 ist je eine Lichtquelle 18 angeordnet. Bei dieser Anordnung ist keine Abschirmung oder Schürze entsprechend der Abschirmung 30 gemäß Fig. 1 erforderlich, jedoch sind die einzelnen Polymerisationsbereiche 24 über Zwischenwände 40 voneinander abgeschirmt.

Es versteht sich, dass anstelle der linearen Anordnung mit drei Zwischenwänden in der Praxis auch eine zweidimensionale Anordnung möglich ist, so dass beispielsweise insgesamt 16, also vier mal vier, Dentalrestaurationen zugleich polymerisiert werden können.

Für die Lichtquellen 18 und die Sensoren 24 kann über eine einzige zentrale Steuervorrichtung 26 die Abschaltung in Abhängigkeit von dem je vorliegenden Polymerisationsgrad realisiert werden.

Erfindungsgemäß ist es vorgesehen, den Polymerisationsgrad des zu polymerisierenden Dentalmaterials während der Polymerisation kontinuierlich zu überwachen. Die Abschaltung oder die Reduktion der Strahlung, die dem Polymerisationsbereich zugeführt wird, wird in Abhängigkeit davon gesteuert, wie weit die Polymerisation fortgeschritten ist. Für die Messung des Polymerisationsgrads lässt sich überraschend in besonders einfacher Weise die Eigenstrahlung des Dentalmaterials während der Polymerisation ausnutzen.

Wenn beispielsweise Polymethylmetacrylat (PMMA) als Hauptbestandteil des zu polymerisierenden Dentalmaterials eingesetzt wird, handelt es sich bei der Polymerisation um eine stark exotherme Reaktion, die insofern leicht überwacht werden kann. Bei einem derartigen Dentalmaterial entsteht eine Erwärmung also, eine Abgabe von Wärmestrahlung im Infrarotbereich, die mit dem erfindungsgemäßen Sensor erfassbar ist.

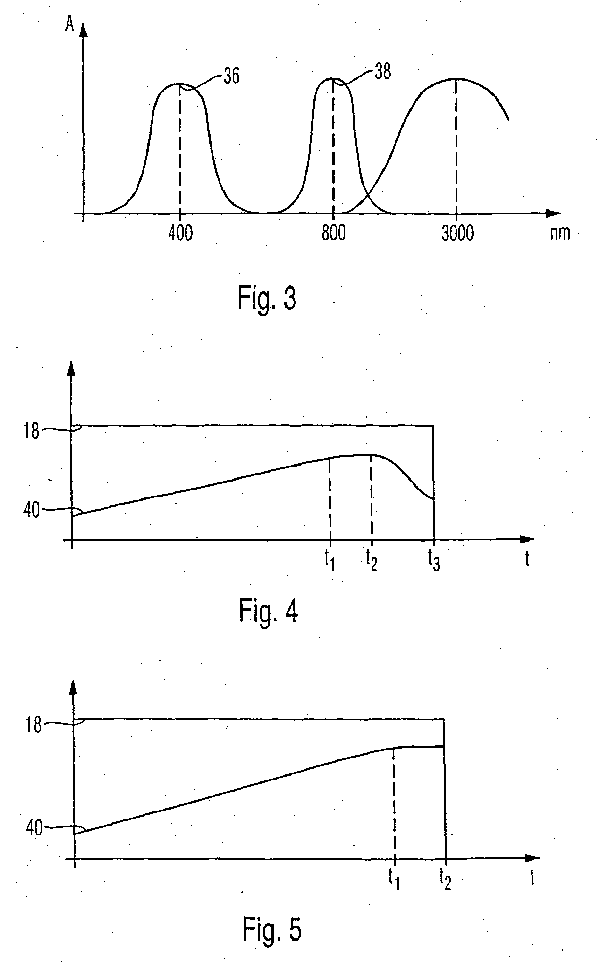

In Fig. 3 ist ein Diagramm zur beispielhaften Darstellung der verwendeten Wellenlängen dargestellt. Das aus den Lichtquellen 18 austretende Licht hat in dem dargestellten Ausführungsbeispiel ein Emissionsmaximum 36 bei etwa 400 nm, liegt also im UV-Bereich. Demgegenüber hat die von den Wärmequellen 20 abgegebene Wärmestrahlung ein Emissionsmaximum 38 von beispielsweise 800 nm, liegt also insofern im Infrarotbereich. Die maximale spektrale Empfindlichkeit des verwendeten Sensors liegt hingegen in dem dargestellten Ausführungsbeispiel bei etwa 3000 nm, also noch im erheblich langwelligeren Infrarotbereich. Bei dieser Wahl der verwendeten Wellenlängen entsteht eine Frequenzentzerrung, so dass nur ein sehr geringer Überlappungsbereich zwischen der Emissionskurve der Wärmequellen 20 und der Empfindlichkeitskurve des Sensors 24 besteht.

Aus Fig. 4 ist ersichtlich, wie das Ausgangssignal 40 des Sensors für die Steuerung der Steuervorrichtung 26 verwendet werden kann. Über die Zeit ist die Lichtbeaufschlagung durch die Lichtquelle 18 eingetragen, ebenso wie die von dem Sensor erfasste Strahlung, die das Ausgangssignal 40 erzeugt.

Mit dem Einschalten der Lichtquelle 18 steigt das Sensorsignal bis zum Zeitpunkt t₁ an. Bis zu diesem Zeitpunkt wird die Polymerisation bei gleichmäßigem Polymerisationsfortschritt durchgeführt, so dass die Eigenstrahlung gleichmäßig zunimmt. In Abhängigkeit von der verwendeten Masse des Dentalmaterials erfolgt jedoch früher oder später eine geringere Zunahme bis zum Maximum der Eigenstrahlung und dem maximalen Ausgangssignal 40 des Sensors 24, zum Zeitpunkt t₂. Anschließend hieran nimmt das Sensorsignal 40 wieder ab, und sobald dies beim Zeitpunkt t₃ festgestellt wird, erfolgt ein Abschalten der Lichtquelle 18.

Eine modifizierte Steuerung durch die Steuervorrichtung 26 ist aus Fig. 5 ersichtlich. Bei dieser Lösung erfolgt die Abschaltung bereits beim Maximum des Sensorsignals 40, also zum Zeitpunkt t₂, und damit kurz nachdem der Gradient des Sensorssignals 40 abnimmt .

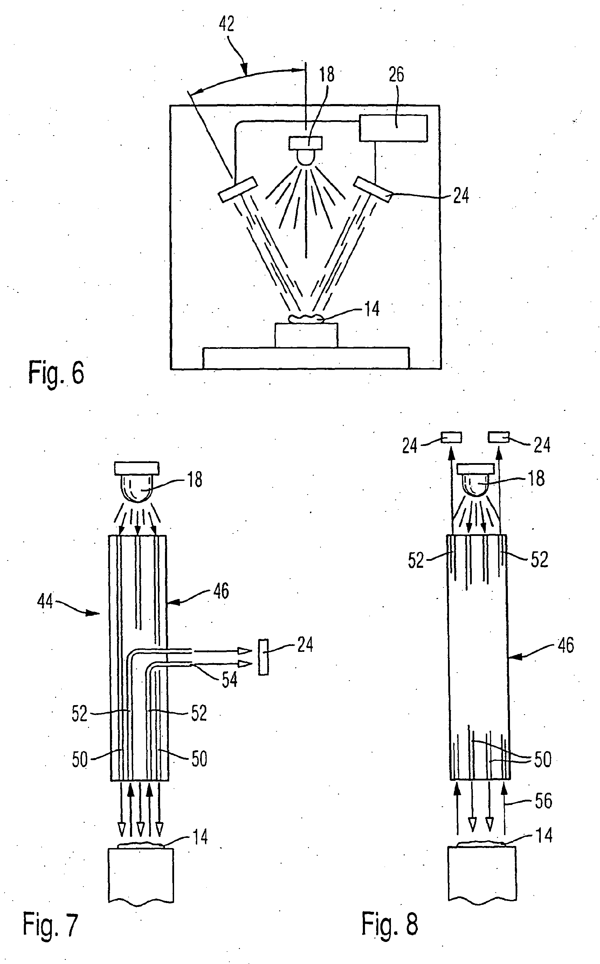

Aus Fig. 6 ist eine weiter modifizierte Ausführungsform eines erfindungsgemäßen Geräts 10 ersichtlich. Bei dieser Lösung ist eine Lichtquelle 18 zentral oberhalb des Dentalmaterials 14 angeordnet, während Sensoren 24 seitlich und schräg im Winkel hierzu oberhalb des Dentalmaterials 14 angeordnet sind. Ein Winkel 42 zwischen den optischen Achsen von Sensor und Lichtquelle lässt sich in weiten Bereichen an die Erfordernisse anpassen.

Aus Fig. 7 und 8 sind modifizierte Ausführungsformen erfindungsgemäßer Geräte ersichtlich, die zusätzlich Lichtleitelemente aufweisen. Bei der Ausführungsform gemäß Fig. 7 ist ein Lichtleitelement 44 vorgesehen, das wenigstens eine Lichtleitfaser aufweist. Zum Lichtleitelement gehört auch eine aus Fig. 7 nicht dargestellte Sammellinse, die die von der Lichtquelle 18 abgegebene Strahlung sammelt und dem Lichtleitstab 46 zuleitet. Hier kann auch in an sich bekannter Weise zusätzlich ein Kantenfilter zur Abschirmung langwelliger Strahlung vorgesehen sein.

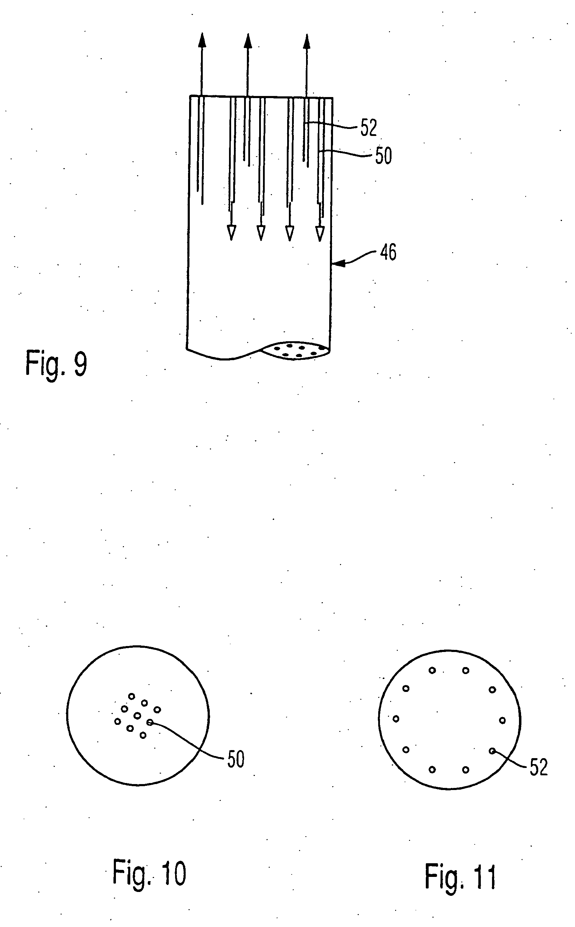

Der Lichtleitstab 46 besteht aus einer Vielzahl nebeneinander angeordneter Lichtleitfasern (vgl. Fig. 10 und 11). Während die Beaufschlagungs-Lichtleitfasern 50 sich axial durch den Lichtleitstab 46 hindurch erstrecken und das Dentalmaterial 14 mit Lichtstrahlung beaufschlagen, sind Erfassungs-Lichtleitfasern 52 seitlich abgebogen, und zwar etwa in der Mitte des Lichtleitstabs 46. Dort bilden sie einen Lichtauslass 54, über den die Erfassungsstrahlung dem Sensor 24 zugeleitet wird.

Im Unterschied zu der Ausführungsform gemäß Fig. 7 sind die Erfassungs-Lichtleitfasern 52 bei der Ausführungsform gemäß Fig. 8 vollständig durch den Lichtleitstab hindurch gezogen. Die Erfassungsstrahlung 56 gelangt bei dieser Ausführungsform dementsprechend vom Polymerisationsbereich 14 durch den Lichtleitstab 46 hindurch und trifft auf die Sensoren 24, die dem Aussenumfang des Lichtleitstabs 46 benachbart, jedoch oberhalb der Lichtquelle 18 angeordnet sind.

In Fig. 9 ist dargestellt, in welcher Weise die Beaufschlagungs-Lichtleitfasern 50 und die Erfassungs-Lichtleitfasern 52 in dem Lichtleitstab parallel zueinander verlaufen können. Es ist je eine Vielzahl von entsprechenden Lichtleitfasern in geeigneter Verteilung vorgesehen, wobei die Fig. 10 und 11 die Anordnung der Beaufschlagungs-Lichtleitfasern 50 und der Erfassungs-Lichtleitfasern 52 schematisch darstellen. Es versteht sich, dass die Anordnung dieser Lichtleitfasern in einem gemeinsamen Lichtleitstab bevorzugt ist, obwohl grundsätzlich auch die Ausbildung von zwei Lichtleitstäben möglich ist.

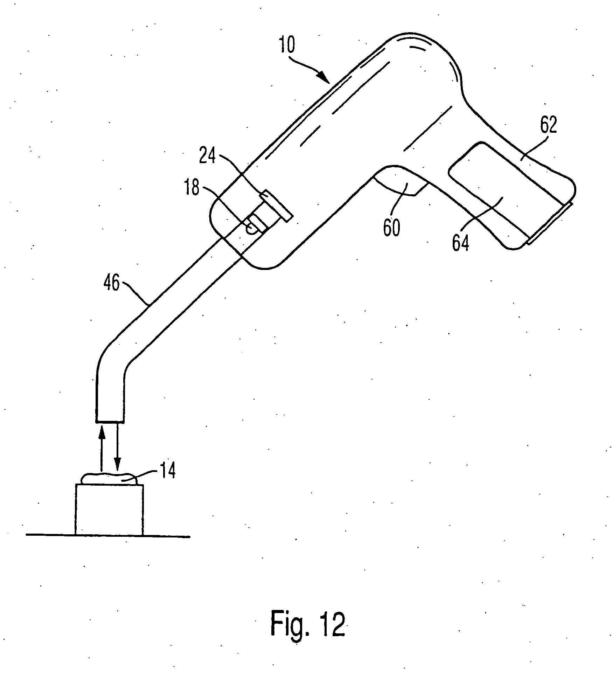

Aus Fig. 12 ist ersichtlich, dass die erfindungsgemäße Lösung auch bei Realisierung des Geräts 10 als Handgerät möglich ist. Auch bei dieser Lösung ist ein Sensor 24 oberhalb einer Lichtquelle 18 angeordnet, wobei der Lichtleitstab 46 in an sich bekannter Weise Erfassungs- und Beaufschlagungslichtleitfasern aufweist. Über das abgekröpfte Ende des Lichtleitstabs lässt sich Dentalmaterial 14 beaufschlagen, sobald das Handgerät 10 über den Einschalttaster 60 eingeschaltet wird. Im Handgriff 62 des Handgeräts 10 aufgenommene Akkumulatoren 64 versorgen die Lichtquelle 18 in an sich bekannter Weise mit Energie, und die Abschaltung erfolgt, sobald in Abhängigkeit vom Ausgangssignal des Sensors 24 festgestellt wird, das die Polymerisation vollständig vorgenommen ist.

## Patentansprüche

1. Gerät zum Polymerisieren von polymerisierbarem Dentalmaterial (14), mit einer Lichtquelle (18), mit welcher das zu polymerisierende Dentalmaterial (14) beaufschlagbar ist, mit einer Steuervorrichtung (26) für die Lichtquelle (18) und einem an die Steuervorrichtung (26) angeschlossenen Sensor (24), wobei der Sensor eine von dem Dentalmaterial (14) abgegebene Elgenstrahlung einer vorgegebenen Wellenlänge erfasst, die vom Wellenlängenbereich der Polymerisationsstrahlung verschieden ist, **dadurch gekennzeichnet, dass** mit dem Sensor (24) Licht in einem Wellenlängenbereich zwischen 800 nm und 10.000 nm erfassbar ist.

2. Gerät nach Anspruch 1, **dadurch gekennzeichnet, dass** mit dem Sensor (24) Licht in einem Wellenlängenbereich zwischen 800 nm und 6.000 nm oder in einem Unterbereich dieses Wellenlängenbereichs erfassbar ist.

3. Gerät nach einem der Ansprüche 1 oder 2, **dadurch gekennzeichnet, dass** das Gerät (10) ein Gehäuse (12) aufweist, das zur Aufnahme von Dentalmaterial (14) bestimmt ist, wobei die Lichtquelle (18) an der Seitenwand des Gehäuses (12) innen angebracht ist, an der auch Wärmequellen (20) angebracht sind, wobei der Sensor (24) oberhalb des Dentalmaterials (14) aufgehängt ist, und wobei eine den Sensor (24) umgebende Abschirmung (30) nach der Art einer Schürze vorgesehen ist.

4. Gerät nach Anspruch 3, **dadurch gekennzeichnet, dass** mit der Steuervorrichtung (26) festlegbar ist, wann die Licht- und Wärmequellen (18, 20) abgeschaltet bzw. wann ihrer Leistung reduziert werden soll.

5. Gerät nach einem der vorhergehenden Ansprüche, **dadurch gekennzeichnet, dass** mit dem Sensor (24) Licht in einem Wellenlängenbereich zwischen 3.000 nm und 5.000 nm oder in einem Unterbereich dieses Wellenlängenbereichs erfassbar ist.

6. Gerät nach einem der Ansprüche 1 bis 5, **dadurch gekennzeichnet, dass** die von der Lichtquelle (18) auf das Dentalmaterial (14) abgegebene Polymerisationsstrahlung in einem Wellenlängenbereich zwischen 350 nm und 550 nm liegt.

7. Gerät nach einem der vorhergehenden Ansprüche, **dadurch gekennzeichnet, dass** der Sensor (24) die vom Dentalmaterial (14) abgegebene Eigenstrahlung (28) während eines Polymerisationszyklus, erfasst.

8. Verfahren zur Bestimmung des Polymerisierungsgrades von polymerisierbaren Dentalmaterialien (14), bei dem eine Lichtquelle (18) Dentalmaterial (14) in einem Polymerisationsbereich eines Gerätes (10) polymerisiert, und bei welchem eine Steuervorrichtung (26) die Lichtquelle (18) basierend auf dem Ausgangssignal eines Sensors (24) steuert, wobei der Sensor (24) auf den Polymerisationsbereich gerichtet ist und einen Zustandsparameter des Dentalmaterials (14), insbesondere dessen Temperatur, erfasst, und wobei die Wellenlängenberelche der Polymerlsatlonsstrahlung und der von dem Dentalmaterial abgegebenen zu erfassenden Eigenstrahlung voneinander verschieden sind, **dadurch gekennzeichnet, dass** der Sensor (24) eine von dem Dentalmaterial (14) abgegebene Strahlung mit einer Wellenlänge zwischen 800 nm und 10.000 nm erfasst.

9. Verfahren nach Anspruch 8, **dadurch gekennzeichnet, dass** der Sensor (24) ein Signal an die Steuervorrichtung abgibt, wenn der Gradient des Zustandsparameters des Dentalmaterials (14) sich ändert, insbesondere die Erwärmung abnimmt.

10. Verfahren nach einem der Ansprüche 8 oder 9, **dadurch gekennzeichnet, dass** die Steuervorrichtung das Ausgangssignal des Sensors (24) verarbeitet und zur Steuerung des Geräts (10), insbesondere zur Steuerung der Lichtquelle (18), aufbereitet.

11. Verfahren nach einem der Ansprüche 8 bis 10, **dadurch gekennzeichnet, dass** ein von der Steuervorrichtung (26) abgegebenes Steuersignal ein Abschaltsignal ist, mit welchem das Gerät (10) ausgeschaltet und der Polymerisationsvorgang beendet wird.

12. Verfahren nach einem der Ansprüche 8 bis 11, **dadurch gekennzeichnet, dass** der Sensor (24) eine vom Dentalmaterial (14) abgegebene Strahlung mit einer Wellenlänge von 3.000 nm bis 5.000 nm erfasst.

13. Verfahren nach einem der Ansprüche 8 bis 12, **dadurch gekennzeichnet, dass** zur Erfassung der von dem Dentalmaterial (14) abgegebenen Strahlung die Lichtquelle (18) während eines Polymerisationszyklus von der Steuervorrichtung (26) mindestens einmal kurzfristig abgeschaltet wird.

## Claims

1. Device for polymerising polymerisable dental material (14), comprising a light source (18), which can be used to impinge the dental material (14) to be polymerised, a control device (26) for the light source (18) and a sensor (24) which is connected to the control device (26), wherein the sensor detects an intrinsic radiation of a predetermined wavelength emitted by the dental material (14), which is different from the wavelength range of the polymerisation radiation, **characterized in that** the sensor (24) can detect light in a wavelength range of between 800 nm and 10,000 nm.

2. Device according to claim 1, **characterized in that** the sensor (24) can detect light in a wavelength range of between 800 nm and 6,000 nm or in a sub-range of this wavelength range.

3. Device according to claim 1 or 2, **characterized in that** the device (10) is provided with a housing (12) which is intended for receiving dental material (14), wherein the light source (18) is attached to the inside of the side wall of the housing (12), to which heat sources (20) are also attached, wherein the sensor (24) is suspended above the dental material (14) and wherein a shield (30) is provided similar to an apron which surrounds the sensor (24).

4. Device according to claim 3, **characterized in that** the control device (26) can determine when the light and heat sources (18, 20) are to be turned off or when their power is to be reduced.

5. Device according to any of the foregoing claims, **characterized in that** the sensor (24) can detect light in a wavelength range of between 3,000 nm and 5,000 nm or in a sub-range of this wavelength range.

6. Device according to claims 1 to 5, **characterized in that** the polymerisation radiation which is emitted from the light source (18) to the dental material (14) is in a wavelength range of between 350 nm and 550 nm.

7. Device according to any of the foregoing claims, **characterized in that** the sensor (24) detects the intrinsic radiation (28) emitted by the dental material (14) during a polymerisation cycle.

8. Method of determining the degree of polymerisation of polymerisable dental materials (14) in which a light source (18) polymerises dental material (14) in a polymerisation range of a device (10) and in which a control device (26) controls the light source (18) based on the output signal of a sensor (24) wherein the sensor (24) is directed at the polymerisation range and detects a status parameter of the dental material (14), in particular its temperature, and wherein the wavelength ranges of the polymerisation radiation and of the intrinsic radiation to be detected, which is emitted by the dental material, are different from one another, **characterized in that** the sensor (24) detects a radiation emitted by the dental material (14) at a wavelength of between 800 nm and 10,000 nm.

9. Method according to claim 8, **characterized in that** the sensor (24) outputs a signal to the control device when the gradient of the status parameter of the dental material (14) changes, in particular when the heating decreases.

10. Method according to claims 8 or 9, **characterized in that** the control device processes the output signal of the sensor (24) and prepares it for controlling the device (10), in particular for controlling the light source (18).

11. Method according to claims 8 to 10, **characterized in that** a control signal which is output by the control device (26) is a switch-off signal which is used to turn off the device (10) and to stop the polymerisation process.

12. Method according to claims 8 to 11, **characterized in that** the sensor (24) detects a radiation emitted by the dental material (14) at a wavelength of 3,000 nm to 5,000 nm.

13. Method according to claims 8 to 12, **characterized in that** for detecting the radiation emitted by the dental material (14) the light source (18) is turned off at least once for a short time during a polymerisation cycle by the control device (26).

## Revendications

1. Dispositif de polymérisation de matériau dentaire polymérisable (14), avec une source de lumière (18), à laquelle le matériau dentaire à polymériser (14) peut être exposée, avec un dispositif de commande (26) pour la source de lumière (18) et un capteur (24) attaché sur le dispositif de commande (26), où le capteur détecte une radiation propre d'une longueur d'onde prédéterminé émise par le matériau dentaire (14) qui est différente de la gamme de longueurs d'onde de la radiation de polymérisation, **caractérisé en ce que** de la lumière ayant une longueur d'onde comprise entre 800 nm et 10,000 nm peut être détectée avec le capteur (24).

2. Le dispositif de la revendication 1, **caractérisée en ce que** la lumière peut être détectée avec le capteur (24) dans une gamme de longueurs d'onde comprise entre 800 et 6,000 nm ou peut être détectée dans une gamme ver le bas de cette gamme de longueurs d'onde.

3. Le dispositif selon l'une des revendications 1 ou 2, **caractérisée en ce que** le dispositif (10) présente un boîtier (12), qui est désigné pour accueillir des matériaux dentaires (14), où la source de lumière (18) est fixée à l'intérieur sur la paroi latérale du boîtier (12), sur laquelle sont aussi fixées des sources de chaleur (20), où le capteur (24) est suspendu au-dessus du matériel dentaire (14) et ou un blindage (30) entourant le capteur (24) à la mode d'un tablier est prévu.

4. Le dispositif selon la revendication 3, **caractérisé en ce qu'**avec le dispositif de commande (26) il peut être déterminé, quand la source de lumière et la source de chaleur (18,20) devraient être éteintes ou leur rendement réduite.

5. Le dispositif selon l'une des revendications précédentes, **caractérisé en ce que** de la lumière dans une gamme de longueur d'onde comprise entre 3 000 nm et 5 000 nm ou dans une gamme vers le bas de cette gamme de longueur d'onde est détectable avec le capteur (24).

6. Dispositif d'après l'une des revendications 1 à 5, **caractérisée en ce que** le rayonnement de polymérisation émise par la source de lumière (18) sur le matériau dentaire (14) est comprise dans une gamme de longueur d'onde entre 350 nm et 550 nm.

7. Le dispositif selon l'une des revendications précédentes, **caractérisé en ce que** le capteur (24), détecte la radiation propre (28), émise par le matériau dentaire (14) au cours d'un cycle de polymérisation.

8. Procédure pour déterminer le degré de polymérisation de matériau dentaire (14) polymérisable, par laquelle une source de lumière (18) polymérise du matériau dentaire (14) dans une zone de polymérisation d'un dispositif (10), et par laquelle un dispositif de commande (26) commande la source de lumière (18), basé sur le signal de sortie d'un capteur (24), où le capteur est dirigé (24) sur la région de polymérisation et détecte un paramètre de l'état du matériau dentaire (14), en particulier sa température, et où les gammes de longueurs d'onde du rayonnement et de la radiation propre à détecter émise par le matériau dentaire sont différentes l'une de l'autre, **caractérisée en ce que** le capteur (24) capte un rayonnement émis par le matériau dentaire (14) d'une longueur d'onde comprise entre 800 nm et 10,000 nm.

9. Procédure selon la revendication 8, **caractérisée en ce que** le capteur (24) émet un signal vers le dispositif de commande, si le gradient du paramètre d'état du matériau dentaire (14) change, en particulier si le réchauffement diminue.

10. La procédure d'une des revendications 8 ou 9, **caractérisé en ce que** le dispositif de commande traite le signal de sortie du capteur (24) et le prépare pour commander le dispositif (10), en particulier pour commander la source de lumière (18).

11. Procédure selon l'une des revendications 8 à 10, **caractérisé en ce qu'**un signal de commande émis par le dispositif de commande (26) est un signal de mise hors service, par lequel le dispositif (10) est éteint et le processus de polymérisation s'arrête.

12. La procédure selon l'une des revendications 8 à 11, **caractérisé en ce que** le capteur (24) détecte une radiation émise par le matériau dentaire (14) avec une longueur d'onde comprise entre 3 000 nm et 5 000 nm.

13. Procédure selon l'une des revendications 8 à 12, **caractérisée par le fait que**, pour détecter la radiation émise par le matériau dentaire (14) la source de lumière (18) est éteinte au moins une fois pendant un cycle de polymérisation par le dispositif de commande (26).
